# EUROPEAN PATENT SPECIFICATION

(11) **EP 1 278 327 B1**
(45) Date of publication and mention of the grant of the patent: **09.05.2007**
(21) Application number: 02705219.0
(22) Date of filing: 15.03.2002
(51) Int. Cl.: H04L 1/00, H04L 1/18

(54) **PACKET TRANSMISSION SYSTEM AND PACKET TRANSMISSION METHOD**
PAKETÜBERTRAGUNGSSYSTEM SOWIE VERFAHREN
SYSTEME ET PROCEDE DE TRANSMISSION PAR PAQUETS

(30) Priority: 19.03.2001 JP 2001078467
(43) Date of publication of application: 22.01.2003
(73) Proprietor: MATSUSHITA ELECTRIC INDUSTRIAL CO., LTD., Kadoma-shi, Osaka 571-8501 (JP)
(72) Inventor: UESUGI, Mitsuru, Yokosuka-shi, Kanagawa 238-0048 (JP); MIYOSHI, Kenichi, Kanazawa-ku, Yokohama-shi, Kanagawa 236- (JP)
(74) Representative: Grünecker, Kinkeldey, Stockmair & Schwanhäusser Anwaltssozietät
(86) International application number: PCT/JP2002/002456
(87) International publication number: WO 2002/078243

(56) References cited:
- EP-A- 0 938 207
- WO-A-99/12303
- JP-A- 1 141 431
- JP-A- 11 331 296
- JP-A- 57 159 148
- JP-A- 2000 004 196
- JP-A- 2000 188 609
- US-A- 5 764 699
- US-A- 5 909 434
- NAIJOH M ET AL: "ARQ schemes with adaptive modulation/TDMA/TDD systems for wireless multimedia communication services" PERSONAL, INDOOR AND MOBILE RADIO COMMUNICATIONS, 1997. WAVES OF THE YEAR 2000. PIMRC '97., THE 8TH IEEE INTERNATIONAL SYMPOSIUM ON HELSINKI, FINLAND 1-4 SEPT. 1997, NEW YORK, NY, USA,IEEE, US, 1 September 1997 (1997-09-01), pages 709-713, XP010247739 ISBN: 0-7803-3871-5
- QUESETH O ET AL: "Algogrithms for link adaptation in GPRS" VEHICULAR TECHNOLOGY CONFERENCE, 1999 IEEE 49TH HOUSTON, TX, USA 16-20 MAY 1999, PISCATAWAY, NJ, USA,IEEE, US, 16 May 1999 (1999-05-16), pages 943-947, XP010342055 ISBN: 0-7803-5565-2
- DENG R H ET AL: "A TYPE I HYBRID ARQ SYSTEM WITH ADAPTIVE CODE RATES" IEEE TRANSACTIONS ON COMMUNICATIONS, IEEE INC. NEW YORK, US, vol. 43, no. 2/4, PART 2, 1 February 1995 (1995-02-01), pages 733-737, XP000502579 ISSN: 0090-6778
- UESUGI MITSURU, KATO OSAMU, HOMMA KOICHI: 'Kaiso fukucho o mochiita tekio hencho packet data denso ni kanshite' THE INSTITUTE OF ELECTRONICS, INFORMATION AND COMMUNICATION ENGINEERS, RCS2000-94 01 September 2000, pages 21 - 26, XP002953410
- UESUGI MITSURU, KATO OSAMU, HOMMA KOICHI: 'Kaisoteki fukucho eno hybrid ARQ(type1) no tekio' THE INSTITUTE OF ELECTRONICS, INFORMATION AND COMMUNICATION ENGINEERS, RCS2000-192 11 January 2001, pages 7 - 12, XP002953411

## Description

### Technical Field

The present invention relates to data transmission systems and packet transmission methods for use in packet transmission communication.

### Background Art

Typically, in packet communication, an intended level of quality is guaranteed by means of retransmitting error-detected packets (ARQ: Automatic Repeat Request). Below an exchange of a signal between apparatus used in a typical packet transmission system that utilizes ARQ is briefly described. In the following description, the apparatus transmitting ARQ data is referred to as the transmission side apparatus, and the apparatus receiving the ARQ data is referred to as the reception side apparatus.

First, the transmission side apparatus transmits data to the reception side apparatus at the then available maximum rate, and the reception side apparatus performs error detection processing upon the data received.

When an error is detected, the reception side apparatus transmits a signal requesting a retransmission of the data (hereinafter called a "NACK signal") to the transmission side apparatus. On the other hand, when no error is detected, the reception side apparatus transmits a signal requesting the transmission of the next data (hereinafter called an "ACK signal") to the transmission side apparatus.

The transmission side apparatus upon receiving a NACK signal retransmits the data same as last time to the reception side apparatus at the then available maximum rate. On the other hand, upon receiving an ACK signal, the transmission side apparatus retransmits the next data to the reception side apparatus at the then available maximum rate.
As thus described, in a typical packet transmission system, the same data is retransmitted when the reception side apparatus makes a retransmission request upon detecting an error in received data and the transmission side apparatus receives the retransmission request.

However, since in such typical packet transmission system the transmission side apparatus applies the same standard upon choosing the transmission scheme at the time of retransmission and at the time of new transmission, an error will recur if the state of the channel is still deteriorated at the time of retransmission. As a result, the number of retransmission times increases and the transmission efficiency decreases. In multivalue modulation such as 16QAM, deterioration is particularly severe when a multi-path situation exists, and increasing the transmission power does not effectively heighten the likelihood of each bit. Normally switching transmission schemes cannot be performed at such a high speed as to follow fading, and so the situation like the above occurs frequently.

The article by NAIJOH M ET AL entitled "ARQ schemes with adaptive modulation/TDMA/TDD systems for wireless multimedia communication services" PERSONAL, INDOOR AND MOBILE RADIO COMMUNICATIONS, 1997. WAVES OF THE YEAR 2000. PIMRC '97., THE 8^{TH} IEEE INTERNATIONAL SYMPOSIUM ON HELSINKI, FINLAND 1-4 SEPT. 1997, NEW YORK, NY, USA, IEEE, US, 1 September 1997 (1997-09-01), pages 709-713, XP010247739 describes an automatic repeat request protocol for transmission of wireless multimedia communication services. The ARQ technique is applied to the symbol rate modulation level by the controlled adaptive modulation system to improve throughput. The symbol rate can be controlled slot by slot according to the expected channel conditions, and different combinations of modulation parameters are given. On reception of an NACK, the sender retransmits the message using a different bit deletion pattern for the puncture coding.

WO99/12303 A discloses changing the modulation scheme upon a retransmission, but does not disclose how to determine the modulation scheme.

The article by QUESETH O ET AL entitled "Algorithms for link adaptation in GPRS" VEHICULAR TEHCNOLOGY CONFERENCE, 1999 IEEE 49^{TH} HOUSTON, TX, USA 16-20 MAY 1999, PISCATAWAY, NJ, USA, IEEE, US, 16 May 1999 (1999-05-16), pages 943-947, XP010342055" discusses two of the four algorithms for link adaptation in GPRS. It is described that it can be relevant to apply stronger coding to the retransmission than to the ordinary transmission to avoid new retransmissions, if for example more than 20% of the RLC blocks failed.

The article by DENG R H ET AL entitled "A TYPE I HYBRID ARQ SYSTEM WITH ADAPTIVE CODE RATES" IEEE TRANSACTIONS ON COMMUNICATIONS, IEEE INC. NEW YORK, US, vol. 43, no. 2/4, PART 2, 1 February 1995 (1995-02-01), pages 733-737, XP000502579 proposes a type I hybrid ARQ system, which automatically adjusts its code rates to match channel BERs.

US-A-5 764 699 and EP-A-0 938 207 disclose a transmitter for use in an ARQ system using adaptive modulation. Depending on an acknowledgement ACK or a non-acknowledgement NACK transmitted from a reception apparatus, the transmitter either sends new data or retransmits the NACKed data. The modulation format for the retransmitted data is selected according to channel quality information fed back from the reception apparatus or, alternatively, the reception apparatus decides the modulation scheme and reports its decision back to the transmitter.

An object of the present invention is to provide a more efficient retransmission apparatus and method that avoid a decrease in data rate due to retransmissions.

The above object is solved by the invention as claimed in the independent claims.

Preferred embodiments of the invention are defined by the dependent claims.
FIG.1 is a block diagram showing a configuration of a transmission side apparatus in a packet transmission system according to Embodiment 1 of the present invention;
FIG.2 is a block diagram showing a configuration of a reception side apparatus in a packet transmission system according to Embodiment 1 of the present invention;
FIG.3 shows a drawing that describes the relationship between modulation schemes and reception results of transmission packets in a packet transmission system according to Embodiment 1 of the present invention;
FIG.4 is a block diagram showing a configuration of a transmission side apparatus in a packet transmission system according to Embodiment 2 of the present invention;
FIG.5 is a block diagram showing a configuration of a reception side apparatus in a packet transmission system according to Embodiment 2 of the present invention;
FIG.6 is a block diagram showing a configuration of a transmission side apparatus in a packet transmission system according to Embodiment 3 of the present invention; and
FIG.7 is a block diagram showing a configuration of a reception side apparatus in a packet transmission system according to Embodiment 3 of the present invention.

### Best Mode for Carrying Out the Invention

With reference to the accompanying drawings now, embodiments of the present invention will be described below. Each embodiment below will describe a case where the modulation scheme is subject to control, which is one transmission scheme.

### (Embodiment 1)

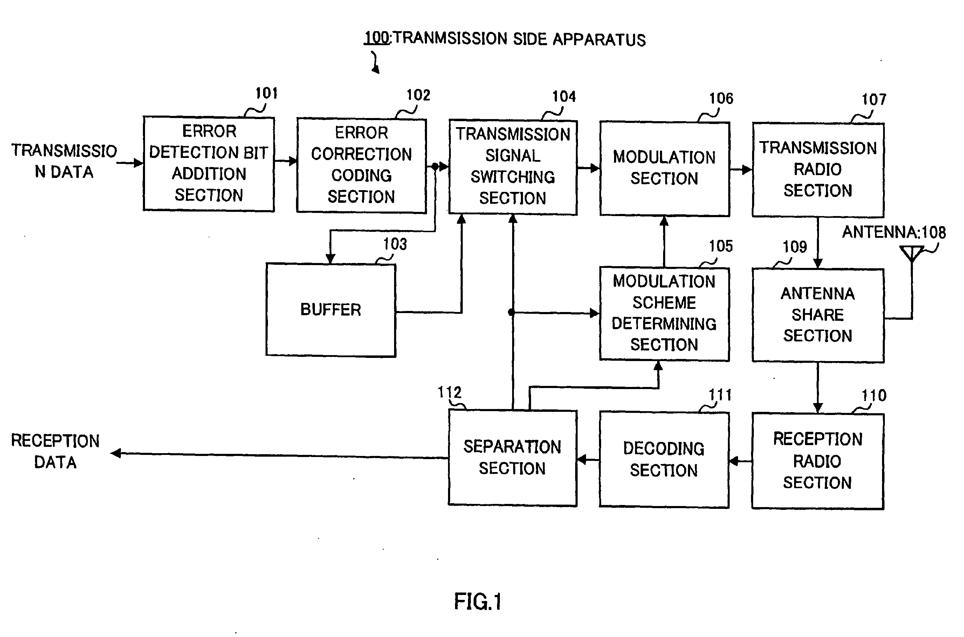

FIG.1 is a block diagram showing a configuration of a transmission side apparatus in a packet transmission system according to Embodiment 1 of the present invention.

Transmission side apparatus shown in FIG.1 comprises error detection bit addition section 101, error correction coding section 102, buffer 103, transmission signal switching section 104, modulation scheme determining section 105, modulation section 106, transmission radio section 107, antenna 108, antenna share section 109, reception radio section 110, demodulation section 111, and separation section 112.

Error detection bit addition section 101 multiplies bits for error detection to transmission data subject to ARQ. Error correction coding section 102 performs error correction coding processing on the output signal from error detection bit addition section 101. Buffer 103 accumulates the output signal from error correction coding section 102 on a temporary basis.

When a signal requesting the transmission of the next data (hereinafter called an "ACK signal") is input from separation section 112, transmission signal switching section 104 outputs the signal encoded in error correction coding section 102 to modulation section 106. On the other hand, when a signal requesting a retransmission of the data (hereinafter called a "NACK signal") is input from separation section 112, transmission signal switching section 104 outputs the signal accumulated in buffer 103 to modulation section 106.

Modulation scheme determining section 105 determines the modulation scheme based on the ACK/NACK signal input from separation section 112 and a signal that shows the quality of the received signal (hereinafter called a "reception quality signal"), and accordingly controls modulation section 106. The details of the modulation scheme determining method in modulation scheme determining section 105 will be described later.

Modulation section 106 modulates the output signal from transmission signal switching section 104 using the modulation scheme based on control of modulation scheme determining section 105. Transmission radio section 107 performs predetermined radio processing such as up-conversion upon the output signal from modulation section 106.

Antenna share section 109 transmits the output signal from transmission radio section 107 by wireless from antenna 108 and outputs the signal received by antenna 108 to reception radio section 110.

Reception radio section 110 performs predetermined radio processing such as down-conversion upon the output signal from antenna share section 109. Demodulation section 111 demodulates the output signal from reception radio section 110.

Separation section 112 separates the output signal from demodulation section 111 into three, that is, into received data, ACK/NACK signal, and reception quality signal, and outputs the received data to an unshown reception processing circuit of a later stage, the ACK signal or the NACK signal to transmission signal switching section 104 and modulation scheme determining section 105, and the reception quality signal to modulation scheme determining section 105.

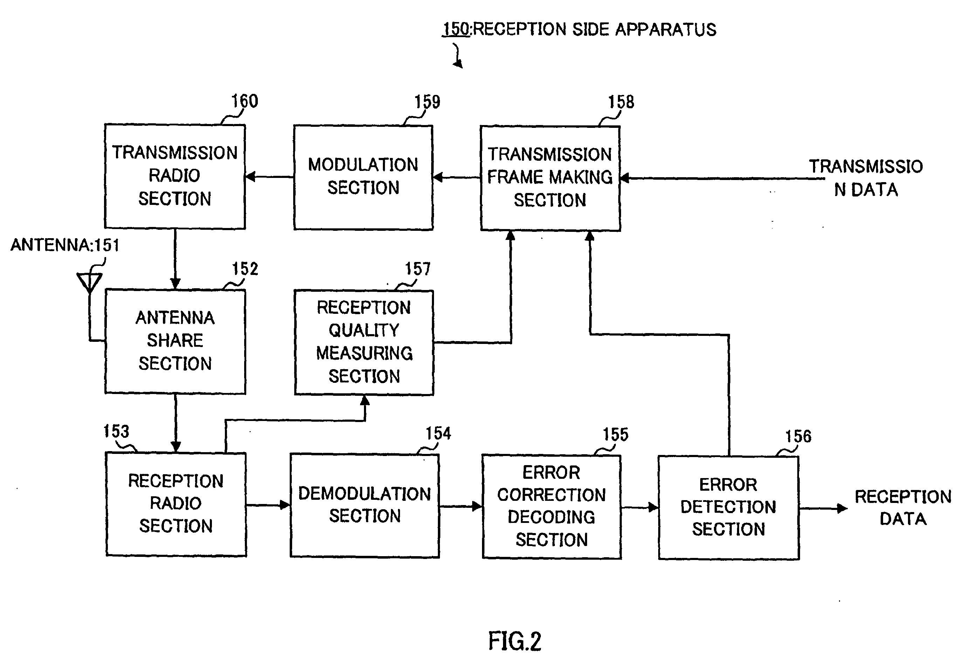

FIG.2 is a block diagram showing a configuration of a reception side apparatus in a packet transmission system according to Embodiment 1 of the present invention.

Reception side apparatus 150 shown in FIG.2 comprises antenna 151, antenna share section 152, reception radio section 153, demodulation section 154, error correction decoding section 155, error detection section 156, reception quality measuring section 157, transmission frame making section 158, modulation section 159, and transmission radio section 160. Antenna share section 152 transmits the output signal from transmission radio section 160 by wireless from antenna 151 and outputs the signal received by antenna 151 to reception radio section 153.

Reception radio section 153 performs predetermined radio processing such as down-conversion upon the output signal from antenna share section 152. Demodulation section 154 demodulates the output signal from reception radio section 153. Error correction decoding section 155 performs decoding processing for error correction upon the demodulated data output from demodulation section 154.

Error correction decoding section 156 performs decoding processing for error correction upon the demodulated data output from demodulation section 155. Error detection section 156, when detecting no error, outputs an ACK signal to transmission frame making section 158, and, when detecting an error, outputs a NACK signal to frame making section 158.

Reception quality measuring section 157 acquires the quality of the received signal by measuring SIR (Signal-to-Interference Ratio) or the received electric field strength, and outputs a reception quality signal that shows the quality of this received signal to transmission frame making section 158.

Transmission frame making section 158 performs framing that multiplexes the ACK signal/NACK signal and reception quality signal into transmission data and outputs the transmission frame signal, which is a framed signal, to modulation section 159.

Modulation section 159 modulates the transmission frame signal. Transmission radio section 160 performs predetermined radio processing such as up-conversion upon the output signal from modulation section 159.

Next, the flow of the data transmission processing that is performed between transmission side apparatus 100 and reception side apparatus 150 will be described. Transmission data subject to ARQ is first added bits for error detection in bit addition section 101 of transmission side apparatus 100 and in error correction coding section 102 subjected to error correction coding processing. The transmission signal that has been subjected to error correction coding processing is accumulated in buffer 103 and meanwhile output to modulation section 106 by way of transmission signal switching section 104.

In modulation section106 the transmission signal is modulated using the modulation scheme of the then maximum rate by control of modulation scheme determining section 105, and the modulated transmission is subjected to predetermined radio processing in transmission radio section 107 and then transmitted by wireless from antenna 108 by way of antenna share section 109.

The signal transmitted by wireless from transmission side apparatus 100 is received by antenna 151 of reception side apparatus 150 and then output to reception radio section 153 by way of antenna share section 152. In reception radio section 153, predetermined radio processing is performed upon the received signal of a radio frequency, and the received signal of a baseband is output to reception quality measuring section 157 and demodulation section 154. In reception quality measuring section 157, the quality of the received signal is acquired, and a reception quality signal for this received signal is output to transmission frame making section 158.

Moreover, the received signal is demodulated in demodulation section 154. The demodulated data is subjected to decoding processing for error detection in error correction decoding section 155, and error detection is performed in error detection section 156. If an error is detected here, a NACK signal is output from error detection section 156 to transmission frame making section 158.

In transmission frame making section 158, framing is performed that multiplexes the reception quality signal and NACK signal into transmission data, and the transmission frame signal is output to modulation section 159.

The transmission frame signal is modulated in modulation section 159, and, after subjected to predetermined radio processing in transmission radio section 160, transmitted by wireless from antenna 151 by way of antenna share section 152.

The signal transmitted by wireless from reception side apparatus 150 is received by antenna 108 of transmission side apparatus 100 and then output to reception radio section 110 by way of antenna share section 109. The signal is then subjected to predetermined radio processing in reception radio section 110 and demodulation in demodulation section 111, and then output to separation section 112.

In separation section 112, the demodulated signal is separated into three, that is, into received data, NACK signal, and reception quality signal, and the received data is output to an unshown reception processing circuit of a later stage, the NACK signal is output to transmission signal switching section 104 and modulation scheme determining section 105, and the reception quality signal is output to modulation scheme determining section 105.

When a retransmission request is recognized from the NACK signal in transmission signal switching section 104 , the signal accumulated in buffer 103 (hereinafter called "retransmission signal") is output to modulation section 106 by way of transmission signal switching section 104.

On the other hand, when a retransmission request is recognized from the NACK signal in modulation scheme determining section 105, a modulation scheme for retransmissions is determined. In modulation section106, the retransmission signal is modulated using the modulation scheme for retransmission by control of modulation scheme determining section 105, and the modulated retransmission is subjected to predetermined radio processing in transmission radio section 107 and then transmitted by wireless from antenna 108 by way of antenna share section 109.

The retransmission signal transmitted by wireless from transmission side apparatus 100 is received by antenna 151 of reception side apparatus 150 and then output to reception radio section 153 by way of antenna share section 152. In reception radio section 153, predetermined radio processing is performed upon the received retransmission signal of a radio frequency, and the received retransmission signal of a baseband is output to reception quality measuring section 157 and demodulation section 154.

In reception quality measuring section 157, the quality of the received retransmission signal is acquired, and a reception quality signal for this received retransmission signal is output to transmission frame making section 158. The received retransmission signal is demodulated in demodulation section 154.

The demodulated retransmission data is subjected to decoding processing for error detection in error correction decoding section 155, and error detection is performed in error detection section 156. If no error is detected here, an ACK signal is output from error detection section 156 to transmission frame making section 158, and the received demodulated data is output to an unshown reception processing circuit of a later stage.

In transmission frame making section 158, framing is performed that multiplexes the ACK signal and reception quality signal into transmission data, which is then transmitted by wireless from antenna 151 by way of modulation section 159, transmission radio section 160, and antenna share section 152. The signal received by antenna 108 of the transmission side apparatus 100 is output to separation section 112 by way of antenna share section 109, reception radio section 110, and demodulation section 111, and the separated ACK signal is output to transmission signal switching section 104 and modulation scheme determining section 105, while the separated reception quality signal is output to modulation scheme determining section 105.

Thereafter, by switching control of transmission signal switching section 104, a new transmission signal is output from error correction coding section 102 to modulation section 106, and a new transmission signal is accumulated in buffer 103. In modulation section106, the transmission signal is modulated using the modulation scheme of the then maximum rate by control of modulation scheme determining section 105, and the modulated transmission signal is subjected to predetermined radio processing in transmission radio section 107 and then transmitted by wireless from antenna 108 by way of antenna share section 109.

As thus described, with the packet transmission system according to Embodiment 1 of the present invention, different modulation schemes are used at the time of new transmission and at the time of retransmission.

Next, the details of the modulation scheme determining method in modulation scheme determining section 105 will be described. First, on the basis of reception quality signal, modulation scheme determining section 105 acquires a maximum rate modulation scheme whereby intended reception quality can be achieved. For example, when the reception quality is good, a high-speed rate modulation scheme such as 16QAM or 64QAM is used, and when the reception quality is poor, a low-speed rate modulation scheme such as QPSK is used.

When an ACK signal is input, modulation scheme determining section 105 controls modulation section 106 in such a way as to perform modulation using the acquired maximum rate modulation scheme. On the other hand, when a NACK signal is input, modulation scheme determining section 105 controls modulation section 106 in such a way as to perform modulation using a modulation scheme for retransmission.

With regard to the method of determining the modulation scheme for retransmission, possible methods may include one that employs the rate obtained by multiplying a maximum rate by a predetermined fixed number (0.5, for instance) and one that employs phase modulation schemes such as BPSK and QPSK on a fixed basis.

By setting the retransmission rate below the maximum rate, it is possible to heighten the precision of error correction decoding and improve the reception quality after retransmission. In particular, the error rate feature becomes good when modulation is performed using BPSK or QPSK, which makes possible the most efficient reception quality improvement after retransmission.

Nevertheless, if the multivalued number at the time of new transmission is big, using BPSK or QPSK for retransmission requires considerable data puncturing. So, with some error correction codes, it may be more advantageous to use 8PSK with a greater number of bits despite the fact that it is somewhat inferior to BPSK and QPSK in terms of error rate feature. With respect to turbo codes and convolutional codes and such, there are cases where retransmitting high likelihood bits results in better performance than retransmitting low likelihood bits over and over again, and so advantageous modulation schemes are ones that are efficient with little energy for each bit such as QPSK and BPSK or ones of a low multivalued number such as 8PSK.

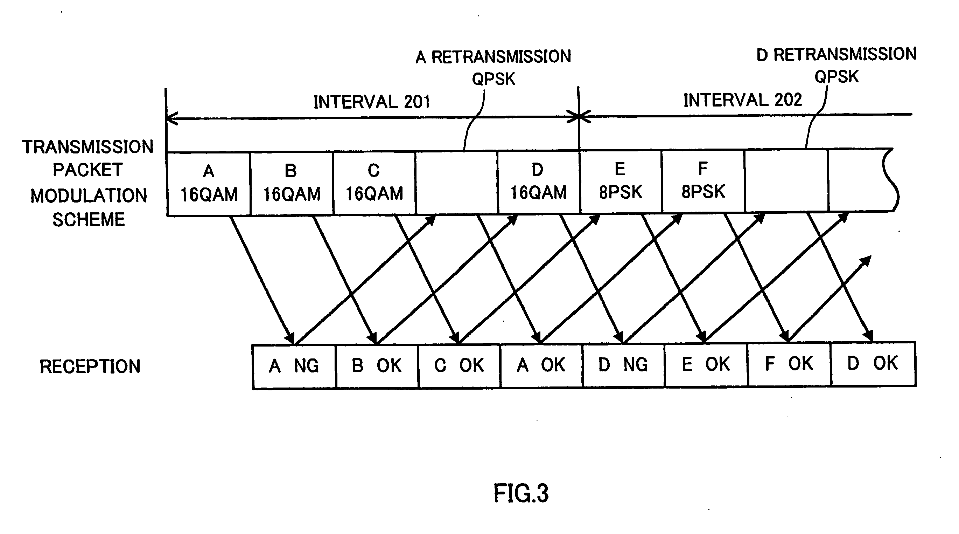

FIG.3 shows a drawing that describes the relationship between modulation schemes and reception results of transmission packets in a packet transmission system according to the present embodiment of the present invention. In FIG.3, a case is illustrated where an error is detected in packets A and D (NG) while the other packets are received correctly (OK). In addition, in FIG.3, the maximum rate modulation scheme in interval 201 is 16QAM, whereas the maximum rate modulation scheme in interval 202 is 8PSK.

In the case illustrated in FIG.3, the reception side apparatus transmits a NACK signal to the transmission side apparatus in order to request a retransmission of packets A and D. The transmission side apparatus, when retransmitting packets A and D, performs modulation using a modulation scheme for retransmission, namely QPSK, instead of the maximum rate modulation scheme.

As described above, by using at the time of retransmission a standard that differs from that for new transmission and by this way selecting a modulation scheme of good error rate feature, it is possible to reduce the number of times retransmission takes place between the transmitter and receiver and to improve the transmission efficiency.

Here, the maximum rate modulation scheme input into modulation scheme determining section 105 is one for the time being (for the particular moment) and varies continuously with time. In consideration of this point, it is also possible to observe maximum rate modulation schemes over a long period of time and determine the modulation scheme for retransmission based on the result of the observation.

With regard to the specific method of conducting a long-term observation and determining the modulation scheme, one possible method is to turn modulation schemes into numbers from low numerical value ones (for instance, BPSK into 0, QPSK into 1, 8PSK into 2, 16QAM into 3, and so on), average them over a long period of time, and then employ the modulation scheme of the numerical value closest to the average value. In this case, it is also possible to weight modulation schemes that are old in time less and then average them. In addition, another possible method is to take histograms over a set period of time, and use the modulation scheme of the greatest number.

As thus described, even though switching transmission schemes cannot be done at such a high speed as to follow fading, by determining the modulation scheme at the time of retransmission based on the result of observing maximum rate modulation schemes over a long period of time, it is possible to retransmit data using the most suitable modulation scheme and to further improve the transmission efficiency.

Although in the above description reception quality is measured in the reception side apparatus, the present invention is not limited thereto and it is also possible that in TDD schemes and such the transmission side apparatus measures the quality of the reverse channel to guess the reception quality in the reception side apparatus.

### (Embodiment 2)

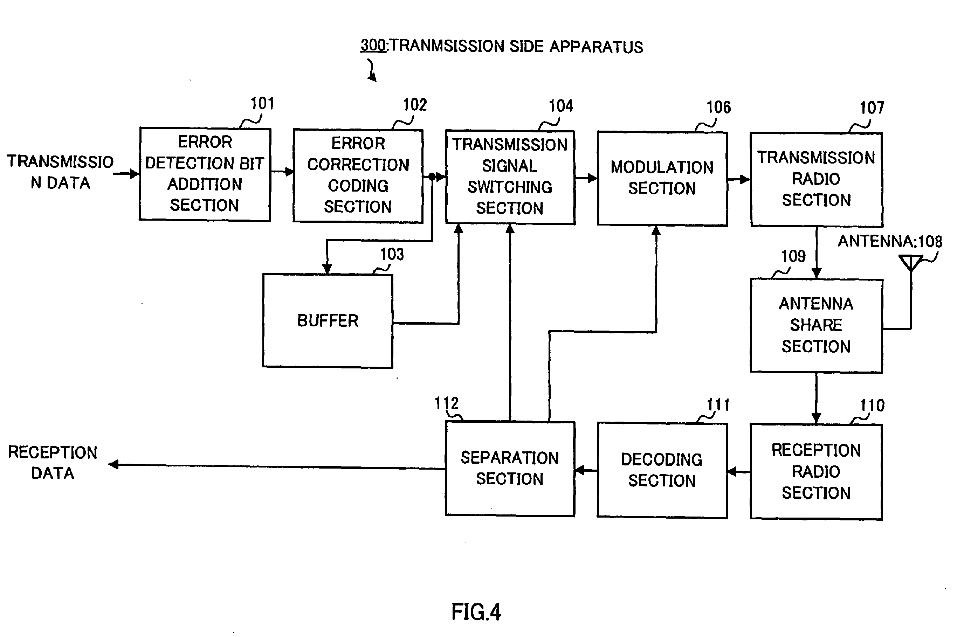

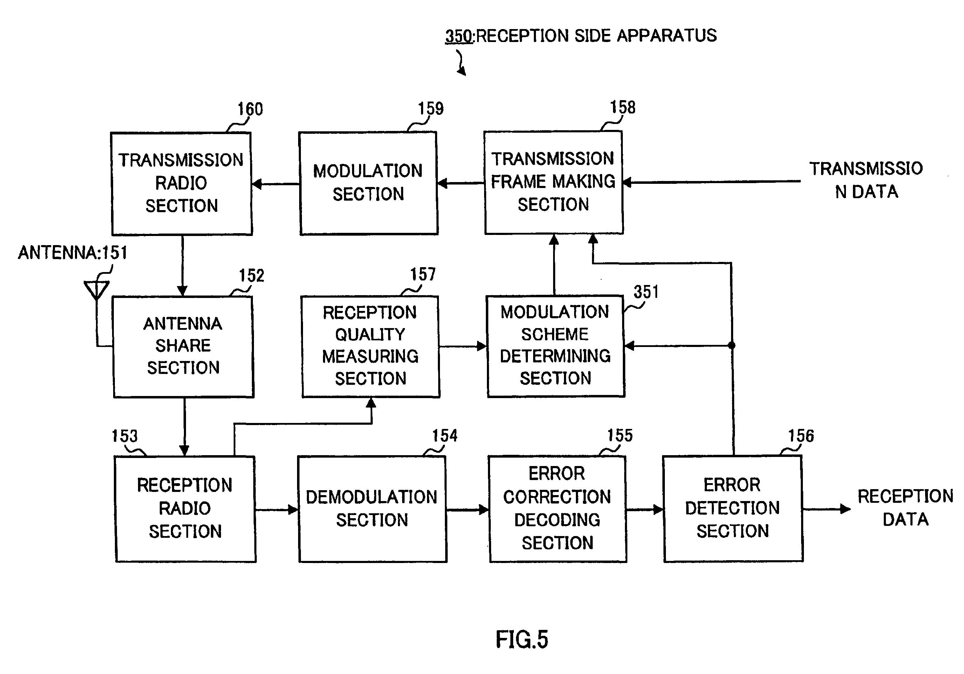

A case will be described here with Embodiment 2 where the reception side apparatus determines the modulation scheme. FIG.4 is a block diagram showing a configuration of a transmission side apparatus in a packet transmission system according to Embodiment 2 of the present invention. FIG.5 is a block diagram showing a configuration of a reception side apparatus in a packet transmission system according to Embodiment 2 of the present invention. Parts in the transmission side apparatus shown in FIG.4 identical to those in above FIG.1 are assigned the same codes as in FIG.1 and their detailed explanations are omitted. Parts in the reception side apparatus in FIG. 5 identical to those in above FIG. 2 are assigned the same codes as in FIG.2 and their detailed explanations are omitted.

Transmission side apparatus 300 shown in FIG.4 employs a configuration in which modulation scheme determining section 105 is removed from transmission side apparatus 100 shown in FIG.1 Reception side apparatus 350 shown in FIG.5 employs a configuration in which modulation scheme determining section 351 is added to reception side apparatus 150 shown in FIG.2.

In reception side apparatus 350, error detection section 156 upon detecting no error outputs an ACK signal to transmission frame making section 158 and modulation scheme determining section 351, and upon detecting an error outputs a NACK signal to transmission frame making section 158 and modulation scheme determining section 351. Reception quality measurement section 157 outputs a reception quality signal to modulation scheme determining section 351.

Modulation scheme determining section 351 determines the modulation scheme based on the ACK signal/NACK signal and reception quality signal, and outputs a modulation scheme signal denoting the determined modulation scheme to transmission frame making section 158. With respect to the methods of determining the modulation scheme in modulation scheme determining section 351, all that are described with reference to modulation scheme determining section 105 of Embodiment 1 are applicable. Moreover, it is also possible that at the time of retransmission (when an NACK signal is input) modulation scheme determining section 351 subtracts a predetermined constant from the SIR measured by reception quality measuring section 157 and determines the maximum rate modulation scheme at the subtraction value as the modulation scheme for retransmission.

Transmission frame making section 158 performs framing whereby the ACK signal/NACK signal and modulation scheme signal are multiplexed into transmission data. The transmission frame signal is transmitted by wireless from antenna 151 by way of modulation section 159, transmission radio section 160, and antenna common use section 152.

Then, the signal received by antenna 108 of transmission side apparatus 300 is output to separation section 112 by way of antenna 109, reception radio section 110, and demodulation section 111, and the separated ACK signal/NACK signal is output to transmission signal switching section 104, and the separated modulation scheme signal is output to modulation scheme determining section 105.

When an ACK signal is input, transmission signal exchange section 104 outputs the signal encoded in error correcting coding section 102 to modulation section 106, and, when a NACK signal is input, outputs the signal stored in buffer 103 to modulation section 106. Modulation section 106 modulates the output signal from transmission signal switching section 104 using the modulation scheme based on the modulation scheme signal and outputs the modulated output signal to transmission radio section 107.

As thud described, it is possible to determine in the reception side apparatus the modulation scheme for retransmission on the basis of reception quality.

### (Embodiment 3)

When error correction coding is performed using turbo codes and such, improving the quality of specific codes alone makes the effect of error correction greater. Then, lately hybridARQ draws attention, whereby at the time of retransmission the transmission side apparatus selects and transmits specific bits to the reception side apparatus, and in the reception side apparatus the retransmission signal and already received signal are combined to improve performance. A case will be described here with Embodiment 3 where the present invention is applied to hybrid ARQ.

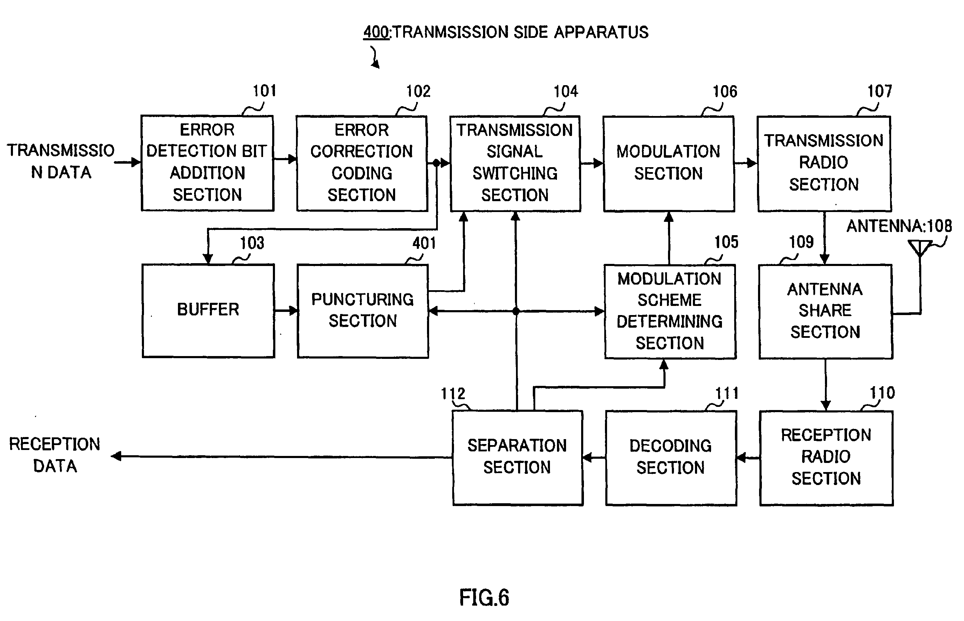

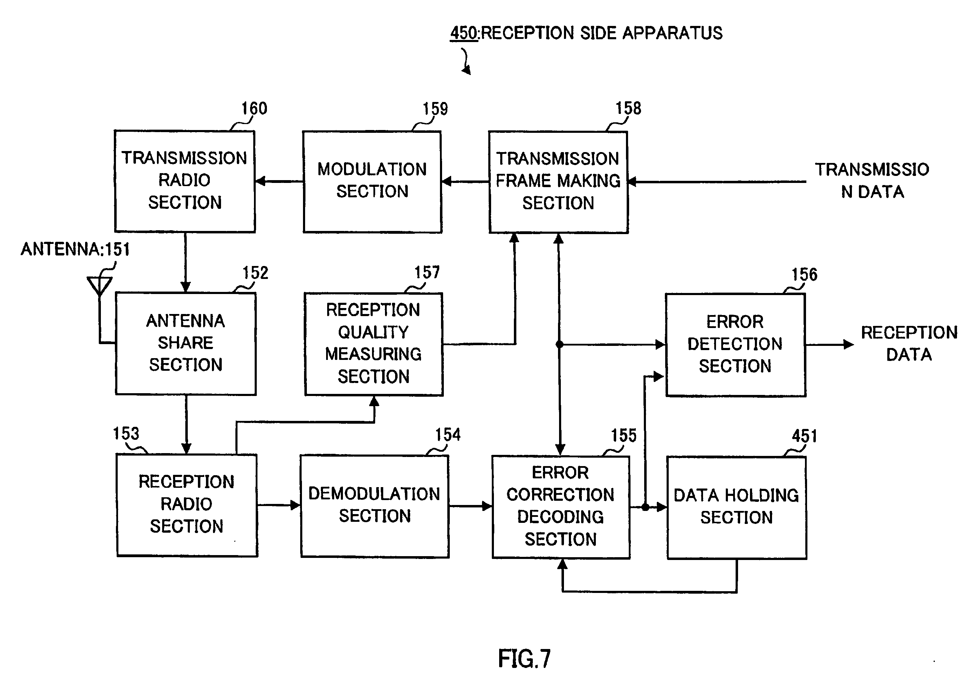

FIG.6 is a block diagram showing a configuration of a transmission side apparatus in a packet transmission system according to Embodiment 3 of the present invention. FIG.7 is a block diagram showing a configuration of a reception side apparatus in a packet transmission system according to Embodiment 3 of the present invention. Parts in the transmission side apparatus shown in FIG.6 identical to those in above FIG.1 are assigned the same codes as in FIG.1 and their detailed explanations are omitted. Parts in the reception side apparatus shown in FIG.7 identical to those in above FIG.2 are assigned the same codes as in FIG.2 and their detailed explanations are omitted.

Transmission side apparatus 400 shown in FIG.6 maintains the configuration of transmission side apparatus 100 shown in FIG.1, to which puncturing section 401 is added. Moreover, transmission side apparatus 450 shown in FIG.7 employs a configuration in which data holding section 451 is added to reception side apparatus 150 shown in FIG.2.

Separation section 112 outputs a NACK signal to transmission signal switching section 104, modulation scheme determining section 105, and to puncturing section 401.

When the NACK signal is input, puncturing section 401 extracts only specific bits from the signal accumulated in buffer 103 and then outputs these bits to transmission signal switching section 104.

When an ACK signal is input, transmission signal switching section 104 outputs the signal encoded in error correction coding section 102 to modulation section 106, and, when a NACK signal is input, outputs the signal extracted in puncturing section 401 to modulation section 106.

Error correction decoding section 155 performs decoding processing for error correction to the demodulated data output from demodulation section 154 and outputs the decoded data to error detection section 156 and data holding section 451. Moreover, when a NACK signal is input from error correction section 156, error correction decoding section 155 performs decoding processing for error correction by combining the demodulated data output from demodulation section 154 and the data held in data holding section 451.

When detecting an error in the decoded data, error detection section 156 outputs the NACK signal to transmission frame making section 158 and error correction decoding section 155.

Data holding section 451 holds the output data from error correction decoding section 155 by writing the output data over already held data.

As described above, by thus extracting and transmitting only specific bits at the time of retransmission, it is possible to make up the deficiency that the use of a transmission scheme of a good error rate feature results in a decrease in data rate. For example, when the modulation scheme at the time of new transmission is 16QAM and the modulation scheme at the time of retransmission is QPSK, retransmitting all data would require twice as much time as new transmission, and yet if by means of puncturing the amount of data for retransmission becomes half, it is possible to make times for retransmission and new transmission equal.

Incidentally, although with each of the above-described embodiments the modulation scheme alone is dealt with as the transmission scheme and is made different between new transmission and retransmission, the present invention is not limited thereto and is suitable to any parameters that establish a trade-off relationship between transmission rate and reception quality, such as spreading rate in CDMA, coding rate for error correction codes, or the ratio of puncturing. Although the number of bits decreases by puncturing, this method is still effective as there are cases where high-likelihood bits by half the number contribute more to the reception side apparatus than transmitting all signals by multivalue modulation.

As described above, according to the present invention, transmission can be performed using a transmission scheme of a good error rate feature at the time of retransmission, which makes it possible to reduce the number of time retransmission takes place between the transmitter and receiver and to improve the transmission efficiency.

### Industrial Applicability

The present invention suits for use in base station apparatus and communication terminal apparatus for packet transmission communication.

## Claims

1. A transmission apparatus (400) comprising:
a data selection section that is adapted to determine either a new transmission or a retransmission, based on ACK or NACK transmitted from a reception apparatus:
**characterised by**
a puncturing section (401) that, in response to receipt of NACK extracts only specific bits out of data, to provide retransmission data; and
a setting section (105) that is adapted to set a modulation scheme for the retransmission data in accordance with an indicator, transmitted from the reception apparatus,
wherein said indicator directly defines a modulation scheme and is based on a reception quality measured by the reception apparatus.

2. The transmission apparatus (400) according to claim 1,
wherein the modulation scheme for the retransmission is different from the modulation scheme for the new transmission.

3. The transmission apparatus (400) according to claim 1,
wherein, if a rate of the retransmission is lower than a rate of the new transmission, said puncturing section (401) extracts the specific bits out of data to make time for the retransmission and the new transmission equal.

4. A packet transmission method including the steps of:
determining either a new transmission or a retransmission, based on ACK or NACK transmitted from a reception apparatus;
**characterised in that**
in response to receipt of NACK extracting only specific bits out of data, to provide retransmission data; and
setting a modulation scheme for the retransmission in accordance with an indicator, transmitted from the reception apparatus,
wherein said indicator directly defines a modulation scheme and is based on a reception quality measured by the reception apparatus.

5. The packet transmission method according to claim 4, wherein the modulation scheme for the retransmission is different from the modulation scheme for the new transmission.

6. A transmission system having a transmission apparatus (400), which is adapted to make a new transmission and a retransmission and a reception apparatus, which is adapted to transmit ACK or NACK based on the new transmission,
wherein a transmission apparatus (400) comprises a data selection section that is adapted to determine either a new transmission or a retransmission, based on ACK or NACK transmitted from a reception apparatus,
**characterised by**
a puncturing section (401) that, in response to receipt of NACK, extracts only specific bits out of data, to provide retransmission data; and
a setting section (105) that is adapted to, in response to receipt of NACK, set a modulation scheme for the retransmission in accordance with an indicator, transmitted from the reception apparatus, wherein said indicator directly defines a modulation scheme and is based on a reception quality measured by the reception apparatus.

## Patentansprüche

1. Sendevorrichtung (400), die umfasst:
einen Datenauswählabschnitt, der so eingerichtet ist, dass er auf Basis einer Empfangsbestätigung (ACK) oder einer negativen Empfangsbestätigung (NACK), die von einer Empfangsvorrichtung gesendet wird, entweder einen neuen Sendevorgang oder eine Sendewiederholung bestimmt,
**gekennzeichnet durch:**
einen Punktierabschnitt (401), der in Reaktion auf Empfang einer negativen Empfangsbestätigung nur spezifische Bits aus Daten extrahiert, um Sendewiederholungs-Daten bereitzustellen; und
einen Festlegeabschnitt (105), der so eingerichtet ist, dass er ein Modulationsschema für die Sendewiederholungs-Daten gemäß einem von der Empfangsvorrichtung gesendeten Indikator festgelegt,
wobei der Indikator ein Modulationsschema direkt definiert und auf einer **durch** die Empfangsvorrichtung gemessenen Empfangsqualität basiert.

2. Sendevorrichtung (400) nach Anspruch 1,
wobei sich das Modulationsschema für die Sendewiederholung von dem Modulationsschema für den neuen Sendevorgang unterscheidet.

3. Sendevorrichtung (400) nach Anspruch 1,
wobei, wenn eine Rate der Sendewiederholung niedriger ist als eine Rate des neuen Sendevorgangs, der Punktierabschnitt (401) die spezifischen Bits so aus Daten extrahiert, dass die Zeiten für die Sendewiederholung und den neuen Sendevorgang gleich sind.

4. Paket-Sendeverfahren, das die folgenden Schritte einschließt:
Bestimmen eines neuen Sendevorgangs oder einer Sendewiederholung auf Basis einer Empfangsbestätigung (ACK) oder einer negativen Empfangsbestätigung (NACK), die von einer Empfangsvorrichtung gesendet wird;
**dadurch gekennzeichnet, dass**
in Reaktion auf Empfang der negativen Empfangsbestätigung nur spezifische Bits aus Daten extrahiert werden, um Sendewiederholungs-Daten bereitzustellen; und
ein Modulationsschema für die Sendewiederholung gemäß einem von der Empfangsvorrichtung gesendeten Indikator festgelegt wird,
wobei der Indikator ein Modulationsschema direkt definiert und auf einer durch die Empfangsvorrichtung gemessenen Empfangsqualität basiert.

5. Paket-Sendeverfahren nach Anspruch 4, wobei sich das Modulationsschema für die Sendewiederholung von dem Modulationsschema für den neuen Sendevorgang unterscheidet.

6. Sendesystem mit einer Sendevorrichtung (400), die so eingerichtet ist, dass sie einen neuen Sendevorgang und eine Sendewiederholung durchführt, und einer Empfangsvorrichtung, die so eingerichtet ist, dass sie auf Basis des neuen Sendevorgangs Empfangsbestätigung oder negative Empfangsbestätigung sendet,
wobei eine Sendevorrichtung (400) einen Datenauswählabschnitt umfasst, der so eingerichtet ist, dass er auf Basis einer Empfangsbestätigung oder einer negativen Empfangsbestätigung, die von einer Empfangsvorrichtung gesendet wird, entweder einen neuen Sendevorgang oder eine Sendewiederholung bestimmt,
**gekennzeichnet durch**
einen Punktierabschnitt (401), der in Reaktion auf Empfang einer negativen Empfangsbestätigung nur spezifische Bits aus Daten extrahiert, um Sendewiederholungs-Daten bereitzustellen; und
einen Festlegeabschnitt (105), der so eingerichtet ist, dass er in Reaktion auf Empfang einer negativen Empfangsbestätigung ein Modulationsschema für die Sendewiederholung gemäß einem von der Empfangsvorrichtung gesendeten Indikator festlegt, wobei der Indikator ein Modulationsschema direkt definiert und auf einer durch die Empfangsvorrichtung gemessenen Empfangsqualität basiert.

## Revendications

1. Appareil de transmission (400) comprenant :
une section de sélection de données adaptée à la détermination d'une nouvelle transmission ou d'une retransmission, sur la base d'un ACK ou d'un NACK transmis par un appareil de réception ;
**caractérisé par**
une section de perforation (401) qui, en réponse à une réception d'un NACK, extrait uniquement des bits spécifiques des données pour fournir des données de retransmission ; et
une section de paramétrage (105) qui est adaptée au paramétrage d'un schéma de modulation pour les données de retransmission conformément à un indicateur, transmis par l'appareil de réception,
dans laquelle ledit indicateur définit directement un schéma de modulation et se base sur une qualité de réception mesurée par l'appareil de réception.

2. Appareil de transmission (400) selon la revendication 1,
dans lequel le schéma de modulation pour la retransmission est différent du schéma de modulation pour la nouvelle transmission.

3. Appareil de transmission (400) selon la revendication 1,
dans lequel, si un débit de la retransmission est inférieur à un débit de la nouvelle transmission, ladite section de perforation (401) extrait les bits spécifiques des données pour que la durée de la retransmission soit égale à celle de la nouvelle transmission.

4. Procédé de transmission de paquets incluant les étapes de :
détermination d'une nouvelle transmission ou d'une retransmission, sur la base d'un ACK ou d'un NACK transmis par un appareil de réception ;
**caractérisé par**
en réponse à une réception d'un NACK, l'extraction uniquement des bits spécifiques des données, pour fournir des données de retransmission ; et
le paramétrage d'un schéma de modulation pour la retransmission conformément à un indicateur, transmis par l'appareil de réception,
dans laquel ledit indicateur définit directement un schéma de modulation et se base sur une qualité de réception mesurée par l'appareil de réception.

5. Procédé de transmission de paquets selon la revendication 4, dans lequel le schéma de modulation pour la retransmission est différent du schéma de modulation pour la nouvelle transmission.

6. Système de transmission comportant un appareil de transmission (400), adapté pour effectuer une nouvelle transmission et une retransmission et un appareil de réception, adapté pour transmettre un ACK ou un NACK d'après la nouvelle transmission,
dans lequel un appareil de transmission (400) comprend une section de sélection de données adaptée pour déterminer une nouvelle transmission ou une retransmission, d'après un ACK ou un NACK transmis par un appareil de réception,
**caractérisé par**
une section de perforation (401) qui, en réponse à la réception d'un NACK, extrait uniquement des bits spécifiques des données, pour fournir des données de retransmission ; et
une section de paramétrage (105) adaptée, en réponse à la réception d'un NACK, au paramétrage d'un schéma de modulation pour la retransmission conformément à un indicateur, transmis par l'appareil de réception, dans laquelle ledit indicateur définit directement un schéma de modulation et se base sur une qualité de réception mesurée par l'appareil de réception.
